# EUROPÄISCHE PATENTSCHRIFT

(11) **EP 2 026 945 B1**
(45) Veröffentlichungstag und Bekanntmachung des Hinweises auf die Patenterteilung: **19.09.2012**
(21) Anmeldenummer: 07725446.4
(22) Anmeldetag: 23.05.2007
(51) Int. Cl.: B29C 45/27

(54) **Spritzgussdüse, insbesondere Heisskanaldüse, zur Anordnung in einem Spritzgiesswerkzeug**
Injection nozzle, in particular hot-runner nozzle, for arrangement in an injection mould
Buse de moulage par injection, notamment buse à canal chaud, devant être disposée dans un outil de moulage par injection

(30) Priorität: 08.06.2006 DE 102006026579
(43) Veröffentlichungstag der Anmeldung: 25.02.2009
(73) Patentinhaber: Günther Heisskanaltechnik GmbH, 35066 Frankenberg/Eder (DE)
(72) Erfinder: GÜNTHER, Herbert, 35108 Allendorf/Rennertehausen (DE)
(74) Vertreter: Grosse, Wolf-Dietrich Rüdiger
(86) Internationale Anmeldenummer: PCT/EP2007/004546
(87) Internationale Veröffentlichungsnummer: WO 2007/140877

(56) Entgegenhaltungen:
- EP-A- 1 369 217
- US-A1- 2005 196 486

## Beschreibung

Die Erfindung betrifft eine Spritzgussdüse, insbesondere Heißkanaldüse, zur Anordnung in einem Spritzgießwerkzeug, das in Abhängigkeit von der Konfiguration eine größere Anzahl von Platten aufweist und an seiner festen Werkzeugseite zumindest eine Rück- bzw. Werkzeugaufspannplatte sowie eine Verteilerplatte und an seiner Formseite zumindest eine Kavitätenplatte besitzt, an deren Formnest die Düsenspitze zum Einsatz kommt, wobei die Heißkanaldüse mit einem Gehäusebund und in einem konzentrischen Materialrohr mit einem in der Düsenspitze mündenden Strömungskanal für eine Materialschmelze ausgebildet ist sowie mit Anschlüssen für eine Heizung und Temperaturmessfühler versehen ist, wobei die Spritzgussdüse von der Formseite her mit Abdichtung zur Verteilerplatte in das Spritzgußwerkzeug eingebaut ist, wie aus der EP 1 369 217 A oder US 2005/196486 A 1 bekannt, auf welche sich der Oberbegliff des Anspruchs 1 bericht.

Durch die DE 195 42 237 B4 ist eine Spritzgussdüse, ausgebildet als Heißkanaldüse mit einem integrierten elektrischen Heizelement, und einer Mittelbohrung als Strömungskanal zur Förderung der thermoplastischen Schmelze bis zur Düsenspitze und anschließend in den Hohlraum einer gekühlten Form bzw. eines trennbaren Werkzeugblockes mit dem darin in einer Kavitätenplatte vorgesehenen Formnest bekannt geworden. Die Kavitätenplatte kann mit mehreren Formnestern und das Spritzgießwerkzeug mit entsprechend mehreren Spritzgussdüsen versehen sein. Das Düsengehäuse weist an seinem rückwärtigen Ende einen Flanschteil auf, der in einem Sitz in einer Platte an der festen Werkzeugseite zum Fixieren der Spritzgussdüse aufgenommen wird.

Bei einer aus der DE 100 04 072 C2 bekannten, in Spritzgießwerkzeugen eingesetzten Heißkanal- oder Kaltkanaldüse, um eine fließfähige Masse bei einer vorgebbaren Temperatur unter hohem Druck einem trennbaren Werkzeugblock (Formnest) zuzuführen, besitzt der Düsenkörper wenigstens eine im Wesentlichen ebene Seitenfläche, an der eine flächige Heiz- und/oder Kühlvorrichtung angebracht ist.

Bei den bekannten Heißkanal- oder Kaltkanaldüsen hat sich herausgestellt, dass deren Einbau in der festen Werkzeugplatte, dort in der Regel an der Verteilerplatte für die Materialschmelze, nachteilig ist. Eventuell auftretende Leckagen zwischen Spritzgussdüse, und Verteiler führen dazu, dass sich die Materialschmelze ungehindert ausbreiten und Schäden an der Spritzgussdüse und den Anschlusskabeln hervorrufen kann.

Der Erfindung liegt daher die Aufgabe zugrunde, für eine gattungsgemäße Spritzgussdüse, insbesondere Heißkanaldüse, eine Bauform zu schaffen, bei der auftretende Leckagen zwischen Düse und Verteiler keine nachteiligen Auswirkungen auf Düse und Verkabelung mit sich bringen können.

Diese Aufgabe wird erfingdungsgemäß dadurch gelöst, dass das hintere, von der Düsenspitze abgewandte Düsengehäuse-Ende mit einer umlaufenden Dichtwulst ausgebildet ist, die passgenau eine in einer der Verteilerplatte in Spritzrichtung vorgeschalteten Zwischenplatte zur Aufnahme des hinteren Düsengehäuse-Endes vorgesehene Durchgangbohrung verschließt. Die mit dem Düsengehäuse-Ende verbundene Dichtwulst hat gegenüber einem optionalen Dichtring oder dergleichen den Vorteil eines stets lagegenauen Passsitzes in der Durchgangsbohrung. Mit dem Einsetzen der Spritzgussdüse in die Durchgangsbohrung verhindert die Außenwulst wirksam, dass evtl. austretender Kunststoff bzw. Metallschmelze zwischen Verteiler und Düsen in die feste Werkzeugseite zum vorderen Düsen-Ende gelangen kann.

Nach einer vorteilhaften Ausgestaltung der Erfindung ist die Zwischenplatte mit einer nach vorne, in Spritzrichtung offenen Ausnehmung zur zentrierenden Aufnahme des Gehäusebundes der Spritzgussdüse ausgebildet. Bei Einbau der Spritzgussdüse wird diese somit über den größeren Gehäusebund fixiert und in ihre Einbaulage geführt.

Wenn vorzugsweise die Ausnehmung mit einem sich zur Spritzrichtung orthogonal erstreckenden Freiraum ausgebildet ist, in dem die Heizungs- und Temperaturfühleranschlüsse untergebracht sind, lässt sich für die Anschlüsse und die Kabel eine Unterbringung in einem geschützten Bereich des Werkzeugs ermöglichen. Durch den erfindungsgemäßen Einbau mit Abdichtung der Düse und abgeschirmter Unterbringung der Heizungs- und / oder Temperaturmeßfühleranschlüsse mit ihren Kabeln lassen sich diese Bauteile in vorteilhafter Weise vor Temperatureinflüssen des heißen Verteilers schützen.

Der Freiraum ist vom Einbauraum des Verteilers der Verteilerplatte mechanisch getrennt.

Nach einem Vorschlag der Erfindung besteht zumindest das das Düsengehäuse-Ende mit dem Gehäusebund bereitstellende Gehäuse der Spritzgußdüse aus Titan. Es läßt sich damit ein für die Schmelze günstiges Temperaturprofil erreichen.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Fig. 1: in einem Teilquerschnitt eine in ein Spritzgießwerkzeug eingebaute Spritzgussdüse, schematisch dargestellt;
- Fig. 2: den Gegenstand der Figur 1 als Teilquerschnitt in einer Seitenansicht;
- Fig. 3: den Gegenstand der Figur 2 in Richtung III - III gesehen;
- Fig. 4: eine Teilansicht der die Heißkanaldüse aufnehmenden Zwischenplatte des Spritzgießwerkzeuges; und
- Fig. 5: einen Längsschnitt der Figur 4.

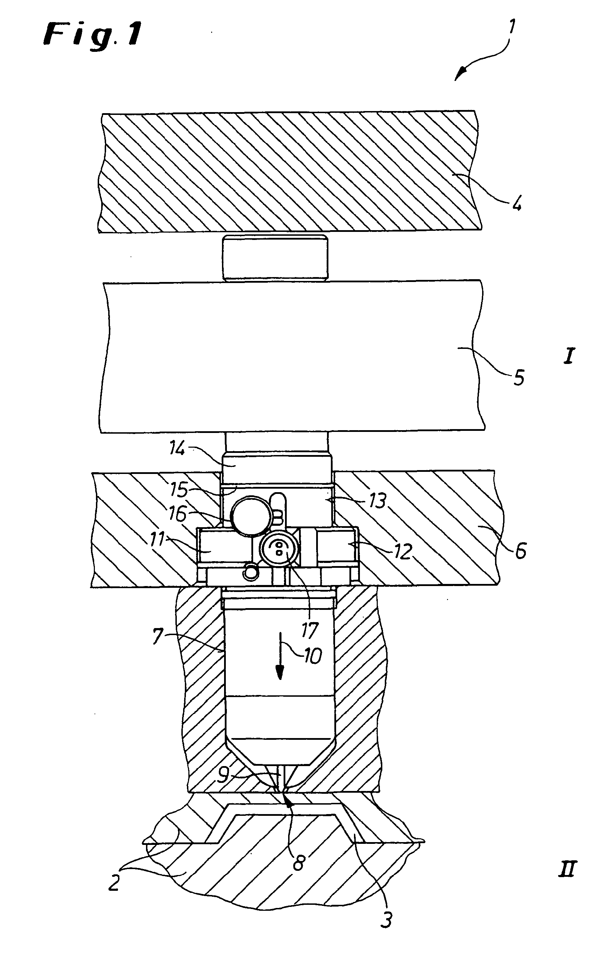

Ein in den Figuren dargestelltes Spritzgießwerkzeug 1 besteht an seiner festen Werkzeugseite I und an seiner einen trennbaren Werkzeugblock mit einer Kavitätenplatte 2 mit darin eingearbeitetem Formnest 3 (vgl. Figur 1) aufweisenden Formseite II mehreren Platten. Von diesen sind an der festen Werkzeugseite I eine Rückplatte bzw. Werkzeugaufspannplatte 4, eine Verteilerplatte 5 mit nicht dargestellten Strömungskanälen und eine Rahmen- bzw. Zwischenplatte 6 gezeigt. In das Spritzgießwerkzeug 1 ist von vorne, von der Formseite II her eine im Ausführungsbeispiel als Heißkanaldüse 7 ausgebildete Spritzgussdüse eingebaut. Diese besitzt in einem zentrischen Mantelrohr einen in einer Düsenspitze 8 mündenden Strömungskanal 9 für die in Spritzgießrichtung gemäß Pfeil 10 von der Verteilerplatte 5 zugeleitete Metallschmelze, die aus der Düsenspitze 8 heraus in das Formnest 3 der Kavitätenplatte 2 strömt, wie aus Figur 1 zu erkennen ist.

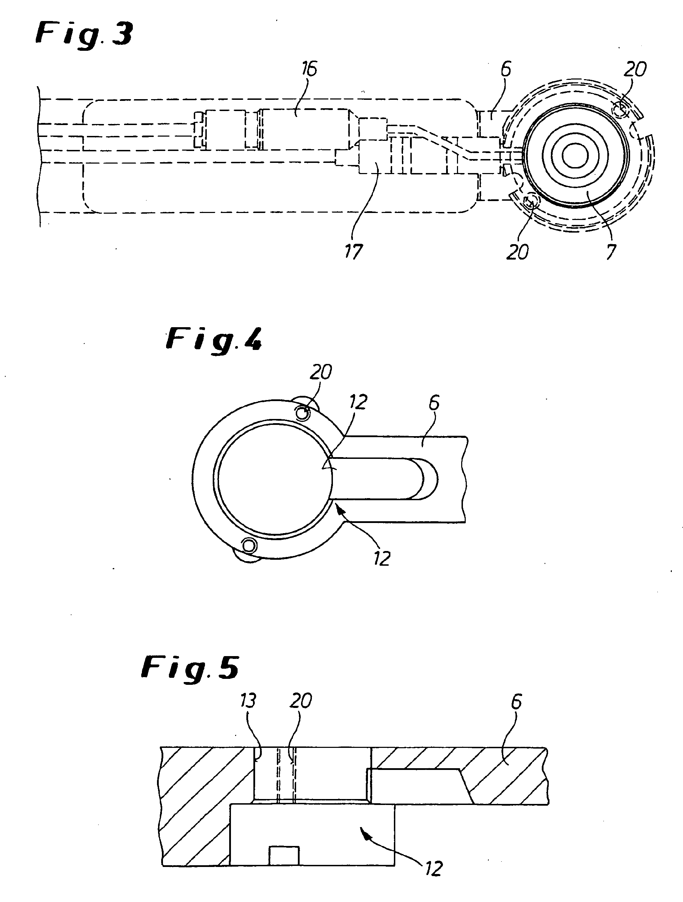

Die Spritzguss- bzw. Heißkanaldüse 7 ist mit einem großen Gehäusebund 11 in eine nach vorne, in Spritzrichtung 10 offene Ausnehmung 12 (vgl. die Figuren 4 und 5) der Zwischenplatte 6 eingesetzt. Die Ausnehmung 12 geht in eine Durchgangsbohrung 13 über, durch die hinaus das hintere Gehäuse-Ende 14 der Heißkanaldüse 7 mit Anschluss zur Verteilerplatte 5 ragt.

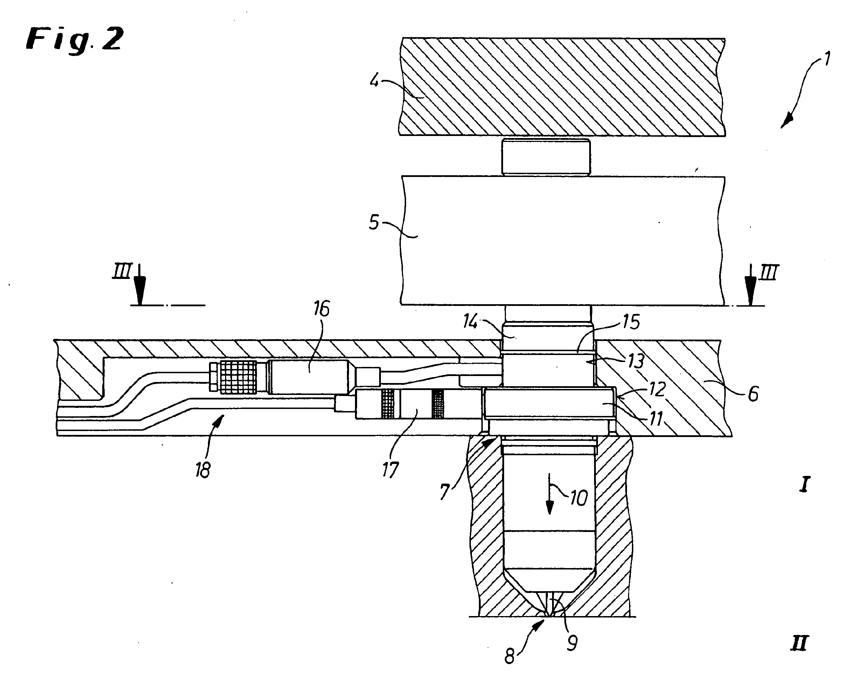

Das hintere Gehäuse-Ende 14 ist mit einer Abdichtung in Form einer umlaufenden Dichtwulst 15 ausgebildet, die sich passgenau in die Durchgangsbohrung 13 der Ausnehmung 12 der Zwischenplatte 6 einfügt, wie aus den Figuren 1 und 2 ersichtlich. Die Abdichtung mittels der im Ausführungsbeispiel gezeigten Dichtwulst 15 verhindert, dass unerwünscht zwischen Verteiler 5 und Düse an der festen Werkzeugseite I austretende Materialschmelze sich in Spritzrichtung 10 zur Heißkanaldüse 7 ausbreiten kann.

Aufgrund der Abdichtung mittels der Dichtwulst 15 bleiben somit Heizungs- und Temperaturmessfühleranschlüsse 16 bzw. 17 mit ihren Kabeln völlig unbeschadet von etwaigen Metallschmelzeleckagen.

Die geschützte Einbaulage der Heizungs- und Temperaturmessfühleranschlüsse 16 bzw. 17 wird weiterhin dadurch begünstigt, dass sie in einem sich orthogonal zur Spritzrichtung 10 erstreckenden Freiraum 18 der Zwischenplatte 6 mit thermischer Abschirmung zur Verteilerplatte 5 untergebracht sind. Zur Zentrierung und Führung der Heißkanaldüse 7 bei ihrem Einbau in die Ausnehmung 12 der Zwischenplatte 6 werden der Gehäusebund 11 sowie das hintere Düsengehäuse-Ende 14 mit der Dichtwulst 15 in diesem Bereich in der Bohrung 13 geführt. Nach dem Einbau in die Ausnehmung 12 der Zwischenplatte 6 wird die Heißkanaldüse 7 mit der Zwischenplatte 6 verschraubt, wobei in der Einbaulage fluchtende Gewindebohrungen 20 (vgl. Figuren 3 bis 5) vorgesehen sind.

### Bezugszeichenliste

- 1: Spritzgießwerkzeug
- 2: Kavitätenplatte
- 3: Formnest
- 4: Werkzeugaufspannplatte
- 5: Verteilerplatte
- 6: Zwischenplatte
- 7: Spritzgussdüse / Heißkanaldüse
- 8: Düsenspitze
- 9: Strömungskanal
- 10: Spritzrichtung (-pfeil)
- 11: Gehäusebund
- 12: Ausnehmung
- 13: Durchgangsbohrung
- 14: Hinteres Gehäuse-Ende
- 15: Dichtwulst
- 16: Heizungsanschluss
- 17: Temperaturmessfühleranschluss
- 18: Freiraum
- 19:
- 20: Gewindebohrung

- I: Feste Werkzeugseite
- II: Formseite

## Patentansprüche

1. Spritzgussdüse, insbesondere Heißkanaldüse (7), zur Anordnung in einem Spritzgießwerkzeug (1), das in Abhängigkeit von der Konfiguration eine größere Anzahl von Platten aufweist und an seiner festen Werkzeugseite (I) zumindest eine Rück- bzw. Werkzeugaufspannplatte (4) sowie eine Verteilerplatte (5) und an seiner Formseite (II) zumindest eine Kavitätenplatte (2) besitzt, an deren Formnest (3) die Düsenspitze (8) zum Einsatz kommt, wobei die Heißkanaldüse (7) mit einem Gehäusebund (11) und in einem konzentrischen Materialrohr mit einem in der Düsenspitze (8) mündenden Strömungskanal (9) für eine Materialschmelze ausgebildet ist sowie mit Anschlüssen für eine Heizung (16) und/oder Kühlung und Temperaturmessfühler (17) versehen ist, wobei die Spritzgussdüse (7) von der Formseite (II) her mit Abdichtung zur Verteilerplatte (5) in das Spritzgießwerkzeug (1) eingebaut ist,
**dadurch gekennzeichnet,**
**dass** das hintere, von der Düsenspitze (8) abgewandte Düsengehäuse-Ende (14) mit einer umlaufenden Dichtwulst (15) ausgebildet ist, die eine in einer der Verteilerplatte (5) in Spritzrichtung (10) vorgeschalteten Zwischenplatte (6) zur Aufnahme des hinteren Düsengehäuse-Endes (14) vorgesehene Durchgangsbohrung (13) verschließt.

2. Spritzgussdüse nach Anspruch 1,
**dadurch gekennzeichnet,**
**dass** die Zwischenplatte (6) mit einer nach vorne, in Spritzrichtung (10) offenen Ausnehmung (12) zur zentrierenden Aufnahme des Gehäusebundes (11) der Spritzgussdüse (7) ausgebildet ist.

3. Spritzgussdüse nach Anspruch 1 oder 2,
**dadurch gekennzeichnet,**
**dass** die Ausnehmung (12), der Gehäusebund (11), das Düsengehäuse-Ende (14) mit der Dichtwulst (15) und die Bohrung (13) konzentrisch angeordnet sind.

4. Spritzgussdüse nach Anspruch 2 oder 3,
**dadurch gekennzeichnet,**
**dass** die Ausnehmung (12) mit einem sich zur Spritzrichtung (10) orthogonal erstreckenden Freiraum (18) ausgebildet ist, in dem die Heizungs- und Temperaturmessfühleranschlüsse (16; 17) untergebracht sind.

5. Spritzgußdüse nach einem der Ansprüche 1 bis 4,
**dadurch gekennzeichnet,**
**daß** die Heizungs- und / oder Temperaturmeßfühleranschlüsse (16; 17) mit ihren Kabeln durch diesen Einbau von den Temperatureinflüssen des heißen Verteilers / der Verteilerplatte (5) geschützt sind.

6. Spritzgußdüse nach einem der Ansprüche 1 bis 5,
**dadurch gekennzeichnet,**
**daß** das das Düsengehäuse-Ende (14) bereitstellende Gehäuse aus Titan besteht.

## Claims

1. An injection nozzle, particularly a hot-runner nozzle (7) for being arranged in an injection molding tool (1) that, depending on the configuration, features a larger number of plates and has on its fixed tool side (I) at least one rear clamping plate or platen (4), as well as a feed plate (5), and on its mold side (II) at least one cavity plate (2), at the mold cavity (3) of which the nozzle point (8) is used, wherein the hot-runner nozzle (7) is realized with a housing collar (11) and in a concentric material tube with a flow channel (9) for a molten material leading to the nozzle point (8), as well as with connections for a heating system (16) and/or cooling system and temperature sensors (17), and wherein the injection nozzle (7) is installed into the injection molding tool (1) from the mold side (II) such that it is sealed relative to the feed plate (5),
**characterized in**
**that** the rear nozzle housing end (14) that faces away from the nozzle point (8) is realized with a circumferential sealing bead (15) that closes a through-bore (13) in an intermediate plate (6) that is arranged upstream of the feed plate (5) referred to the injecting direction (10) and serves for accommodating the rear nozzle housing end (14).

2. The injection nozzle according to Claim 1,
**characterized in**
**that** the intermediate plate (6) is realized with a recess (12) that is open toward the front, i.e., in the injecting direction (10), and serves for accommodating the housing collar (11) of the injection nozzle (7) in a centering fashion.

3. The injection nozzle according to Claim 1 or 2,
**characterized in**
**that** the recess (12), the housing collar (11), the nozzle housing end (14) within the sealing bead (15) and the bore (13) are arranged concentric.

4. The injection nozzle according to Claim 2 or 3,
**characterized in**
**that** the recess (12) is realized with a free space (18) that extends orthogonal to the injecting direction (10) and in which the heating and temperature sensor connections (16; 17) are accommodated.

5. The injection nozzle according to one of Claims 1 to 4,
**characterized in**
**that** the heating and/or temperature sensor connections (16; 17) and their cables are protected from the temperature influences of the hot feeder/feed plate (5) due to this installation.

6. The injection nozzle according to one of Claims 1 to 5,
**characterized in**
**that** the housing forming the nozzle housing end (14) consists of titanium.

## Revendications

1. Buse de moulage par injection, notamment buse pour canal chaud (7), destinée à être disposée dans un moule pour injection (1), qui en fonction de la configuration comporte un plus grand nombre de plaques et qui sur son côté fixe d'outil (I) comporte au moins une plaque de fixation arrière ou plaque de fixation d'outil (4), ainsi qu'une plaque distributrice (5) et sur son côté moule (II) comporte au moins une plaque à cavités (2) sur la cavité de moule (3) de laquelle la pointe de la buse (8) est utilisée, la buse pour canal chaud (7) étant réalisée avec un bourrelet de carter (11) et dans un tube de matériau concentrique avec un canal d'écoulement (9) débouchant dans la pointe de la buse (8) pour une masse de matière fondue et étant munie de raccords pour un chauffage (16) et ou un refroidissement et d'une sonde thermique (17), la buse de moulage par injection (7) étant encastrée dans le moule pour injection (1) à partir du côté moule (II) avec une étanchéité par rapport à la plaque distributrice (5),
**caractérisée en ce que**
l'extrémité arrière du carter de la buse (14), opposée à la pointe de la buse (8) est conçue avec un bourrelet d'étanchéité (15) périphérique, qui ferme un perçage traversant (13) prévu dans une plaque intermédiaire (6) montée en amont de la plaque distributrice (5) dans le sens d'injection (10), pour le logement de l'extrémité arrière du carter de la buse (14).

2. Buse de moulage par injection selon la revendication 1,
**caractérisée en ce que**
la plaque intermédiaire (6) est conçue avec un évidement (12) ouvert sur l'avant, dans le sens d'injection (10) pour le logement centré du bourrelet de carter (11) de la buse de moulage par injection (7).

3. Buse de moulage par injection selon la revendication 1 ou 2,
**caractérisée en ce que**
l'évidement (12), le bourrelet de carter (11), l'extrémité du carter de la buse (14) sont disposés de façon concentrique avec le bourrelet d'étanchéité (15) et le perçage (13).

4. Buse de moulage par injection selon la revendication 2 ou 3,
**caractérisée en ce que**
l'évidement (12) est conçu avec un espace libre (18) s'étendant sous forme orthogonale par rapport au sens d'injection (10), dans lequel sont logés les raccords pour le chauffage et la sonde thermique (16 ; 17).

5. Buse de moulage par injection selon l'une quelconque des revendications 1 à 4,
**caractérisée en ce que**
les raccords pour le chauffage et/ou la sonde thermique (16 ; 17) avec leurs câbles sont protégés par ce mode de montage contre les influences thermiques du distributeur / de la plaque de distribution (5) chaud(e)s.

6. Buse de moulage par injection selon l'une quelconque des revendications 1 à 5,
**caractérisée en ce que**
le carter mettant à disposition l'extrémité du carter de la buse (14) est en titane.
